# EUROPÄISCHE PATENTSCHRIFT

(11) **EP 2 988 954 B1**
(45) Veröffentlichungstag und Bekanntmachung des Hinweises auf die Patenterteilung: **21.06.2017**
(21) Anmeldenummer: 14716308.3
(22) Anmeldetag: 09.04.2014
(51) Int. Cl.: B60B 35/04, B60B 35/08, B60B 35/02, B60B 35/06, B60B 35/16, B60G 21/05

(54) **ACHSKÖRPER UND FAHRWERKSEINHEIT**
AXLE BODY AND CHASSIS UNIT
CORPS D'ESSIEU ET TRAIN DE ROULEMENT

(30) Priorität: 23.04.2013 DE 102013207314
(43) Veröffentlichungstag der Anmeldung: 02.03.2016
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2014/057124
(87) Internationale Veröffentlichungsnummer: WO 2014/173681

(56) Entgegenhaltungen:
- DE-U1- 29 602 254
- DE-U1- 29 615 286
- GB-A- 2 014 064
- US-A- 1 906 290

## Beschreibung

Die vorliegende Erfindung betrifft einen Achskörper sowie eine Fahrwerkseinheit eines Kraftfahrzeuges, bevorzugt eines Nutzfahrzeuges.

Derartige Achskörper sind aus dem Stand der Technik hinlänglich bekannt. Besonders verbreitet ist dabei die Ausbildung des Achskörpers als hohlkörperförmiger, sich im Wesentlichen gleichmäßig entlang einer Längsache erstreckender Körper. Die hohlkörperförmige Bauweise hat sich dabei insbesondere mit Blick auf die Biege- und Torsionsfestigkeit des Achskörpers im Vergleich zu einer Vollkörperachse durchgesetzt, da eine hohlkörperförmige Achse bei gleichem Gewicht eine ungleich höhere Biege- und Torsionsfestigkeit erreichen kann. Die Biege- und Torsionsfestigkeit einer Achse hängt dabei insbesondere von der Ausgestaltung des Querschnitts ab. Eine optimale Querschnittsgestaltung von aus dem Stand der Technik bekannten Achskörpern konnte aber bislang noch nicht zum Einsatz gelangen, da eine derartige Ausgestaltung des Achskörpers regelmäßig mit den Bauraumbegrenzungen im Fahrwerksbereich eines Nutzfahrzeuges kollidiert. Gleichzeitig mussten bislang für Nutzfahrzeuge mit verschiedenen Gewichtsklassen und entsprechend verschiedenen Bauraumverhältnissen im Fahrwerksbereich jeweils einzelne, nur für den jeweiligen Nutzfahrzeugtyp hergestellte Achskörper verwendet werden, was in einer Vielzahl von bereit zu stellenden Achskörpermodellen resultiert. Es besteht daher ein dringender Bedarf angesichts vorgegebener Bauraumverhältnisse im Fahrwerksbereich des Nutzfahrzeuges einen Achskörper sowohl in Bezug auf sein Gewicht als auch in Bezug auf die vielfältige Verwendbarkeit in verschiedenen Nutzfahrzeugmodellen zu optimieren.

Die US-A-1,906,290 offenbart einen Achskörper für Kraftfahrzeuge, mit einem Achsrohr und einem Achsstummel, wobei das Achsrohr hohlkörperförmig ausgebildet ist und einen ebensymmetrisch ausgebildeten ersten Abschnitt aufweist, wobei das Achsrohr einen zweiten Abschnitt aufweist, der in Bezug auf eine der Symmetrieebenen des ersten Abschnitts unsymmetrisch ausgebildet ist, wobei der Achsstummel an einem distalen, rotationssymmetrisch ausgebildeten Ende des Achsrohres angeordnet ist.

Aufgabe der vorliegenden Erfindung ist es, einen Achskörper bereitzustellen, welcher eine Gewichtsreduzierung ermöglicht und gleichzeitig vielfältiger einsetzbar ist als die aus dem Stand der Technik bekannten Achssysteme.

Diese Aufgabe wird gelöst mit einem Achskörper gemäß dem unabhängigen Anspruch 1 sowie einer Fahrwerkseinheit gemäß dem unabhängigen Anspruch 11. Weitere Vorteile und Merkmale der Erfindung ergeben sich aus den abhängigen Ansprüchen.

Erfindungsgemäß umfasst der Achskörper zum Einsatz in Kraftfahrzeugen ein Achsrohr und einen Achsstummel, wobei das Achsrohr hohlkörperförmig ausgebildet ist und einen ebenensymmetrisch ausgebildeten ersten Abschnitt aufweist, wobei das Achsrohr einen zweiten Abschnitt aufweist, welcher in Bezug auf eine der Symmetrieebenen des ersten Abschnitts unsymmetrisch ausgebildet ist, wobei der Achsstummel an einem distalen, rotationssymmetrisch ausgebildeten Ende des Achsrohres angeordnet ist, wobei der zweite Abschnitt einen zweiten Umfang aufweist, der kleiner ist als ein erster Umfang des ersten Abschnitts, wobei der zweite Umfang zum ersten Umfang in einem Verhältnis von 0,820 - 0,995 steht, wobei der zweite Abschnitt eine Abflachung mit einer im Wesentlichen ebenen Fläche aufweist, und wobei die Abflachung eine Breite aufweist, die zum ersten Umfang in einem Verhältnis von 0,05 - 0,31 steht. Das Achsrohr weist einen ersten Abschnitt auf, welcher ebenensymmetrisch ausgebildet ist. Mit anderen Worten ist vorzugsweise der Querschnitt des ersten Abschnitts in einer zur Längsachse senkrecht stehenden Schnittebene ebenensymmetrisch zu einer Symmetrieebene ausgebildet. Dabei ist die zumindest eine Symmetrieebene des ersten Abschnitts derart angeordnet, dass die Längsachse des Achsrohres in dieser Symmetrieebene liegt, wobei der erste Abschnitt des Achsrohres spiegelsymmetrisch zu dieser Ebene ausgebildet ist. Weiterhin ist es bevorzugt, dass der erste Abschnitt in einer Vielzahl von entlang der Längsachse angeordneten Querschnitten in der beschriebenen Weise ebenensymmetrisch ausgebildet ist. Bevorzugt weist der erste Abschnitt des Achsrohres einen im Wesentlichen polygonalen Querschnitt auf, wobei aber vorzugsweise Rundungen an den jeweiligen Ecken der polygonalen Geometrie vorgesehen sind. Weiterhin weist das Achsrohr einen zweiten Abschnitt auf, welcher unsymmetrisch zu einer Symmetrieebene des ersten Abschnitts ausgebildet ist. Der zweite Abschnitt stellt vorzugsweise für den Verlauf der Außenkontur des Achsrohres entlang der Längsachse einen Rücksprung, bzw. eine Absenkung oder mit anderen Worten eine Mulde in der ansonsten gleichmäßigen Außengeometrie des Achsrohres dar. Der zweite Abschnitt dient dabei insbesondere der Vermeidung einer Berührung zwischen dem Achsrohr und angrenzenden Periphersystemen der Fahrwerkseinheit. Mit anderen Worten ist der zweite Abschnitt des Achsrohres vorgesehen, um ein Achsrohr mit einem im ersten Abschnitt vergleichsweise großen Querschnitt bzw. einem weit ausladenden Querschnitt in ein bestehendes Fahrwerkssystem mit Periphersystemen, welche bei Vorhandensein nur des ersten Abschnitts an dem Achsrohr anschlagen würden, zu integrieren. Es kann bevorzugt sein, dass das Achsrohr eine Vielzahl von zweiten Abschnitten aufweist, um das Achsrohr auch in einem durch mehrere Periphersysteme begrenzten Bauraum oder in verschiedenen Fahrwerkssystemen mit unterschiedlich angeordneten Periphersystemen einsetzen zu können. Durch die erfindungsgemäße Anordnung von zumindest einem zweiten Abschnitt am Achsrohr ist es möglich, den mittleren Querschnitt des Achsrohres d. h. den durchschnittlichen Querschnitt des Achsrohres im Verlauf entlang der Längsachse, besonders groß bzw. ausladend zu gestalten, und gleichzeitig zu verhindern, dass das Achsrohr mit Periphersystemen des Fahrwerks des Nutzfahrzeuges kollidiert. Durch den großen Querschnitt des Achsrohres kann insbesondere das Flächenträgkeitsmoment bei gleichzeitig geringen Wandstärken vergrößert werden. Es lässt sich auf diese Weise durch einen erfindungsgemäß ausgelegten Achskörper das Gewicht des Achskörpers reduzieren und gleichzeitig trotzdem die erforderliche Biege- und Torsionsfestigkeit verwirklichen.

Bevorzugt ist ein Querschnitt des ersten Abschnitts zu zwei Ebenen, bzw. Symmetrieebenen, die sich in der Längsachse des Achsrohres schneiden, ebenensymmetrisch ausgebildet, wobei ein Querschnitt des zweiten Abschnitts zu einer der Ebenen ebenensymmetrisch ausgebildet ist und zu der jeweils anderen Ebene unsymmetrisch ausgebildet ist. Die Symmetrieebenen des ersten Abschnitts stehen vorzugsweise senkrecht aufeinander, wobei die Längsachse des Achsrohres vorzugsweise die Schnittlinie, welche sich im Schnittbereich der beiden Ebenen ergibt, ist. Bevorzugt ist bei zwei Symmetrieebenen der Querschnitt des ersten Abschnitts Achsrohres rechteckig, vorzugsweise quadratisch ausgebildet, wobei jeweils in den Ecken des Rechtecks, oder Quadrats vorzugsweise Rundungen vorgesehen sind, um sowohl die Fertigung zu erleichtern, als auch um Spannungsspitzen im Eckenbereich des Achsrohres zu vermeiden. Der Querschnitt des zweiten Abschnitts des Achsrohres ist bevorzugt nur zu einer der Symmetrieebenen des ersten Abschnitts ebenensymmetrisch ausgebildet und zu der anderen jeweils unsymmetrisch, d. h. mit anderen Worten der zweite Abschnitt weist vorzugsweise einen rechteckigen bzw. einen von der gleichseitigen polygonalen Form abweichenden Querschnitt auf. Im bevorzugten Fall, dass der erste Abschnitt einen kreisförmigen bzw. kreisringförmigen Querschnitt aufweist, weist der zweite Abschnitt entsprechend vorzugsweise eine von der Kreisform abweichende Querschnittsgeometrie auf. Insbesondere ist dabei der zweite Abschnitt bezogen auf den ersten Abschnitt ein Rücksprung, welcher dafür sorgt, dass in der Nähe des Achsrohres zusätzlicher Bauraum verbleibt, welcher durch Periphersysteme des Fahrwerks des Nutzfahrzeuges eingenommen werden kann.

Insbesondere bevorzugt weist der erste Abschnitt des Achsrohres einen, vorzugsweise im Verlauf entlang der Längsachse, im Wesentlichen konstanten Querschnitt auf, wobei ein 0,4 - 0,95-faches vorzugsweise ein 0,5 - 0,8-faches und besonders bevorzugt ein 0,6 - 0,7-faches des Querschnitts des zweiten Abschnitts deckungsgleich mit dem Querschnitt des ersten Abschnitts ist. Der Begriff "im Wesentlichen konstant" bedeutet im diesem Zusammenhang, dass entlang des Verlaufes des ersten Abschnitts des Achsrohres durchaus kleinere Querschnittsänderungen, wie Aussparungen, Bohrungen oder Vorsprünge, vorgesehen sein können, beispielsweise um das Achsrohr an weiteren Elementen des Fahrwerks festzulegen oder um Leitungen ein- oder austreten zu lassen. Vorzugsweise ist dabei der Querschnitt des ersten Abschnitts des Achsrohres auf zumindest dem 0,9-fachen der Erstreckung des ersten Abschnitts entlang der Längsachse des Achsrohres tatsächlich konstant, d. h. unverändert in seiner Fläche als auch in den geometrischen Maßen. Die Untergrenze des bevorzugten Verhältnisses von 0,4 wird insbesondere dann erreicht, wenn zum Einbau des Achsrohres in ein vorhandenes Fahrwerkssystem eine besonders stark von der ansonsten vorhandenen Geometrie des ersten Abschnitts abweichende Geometrie des zweiten Abschnitts erforderlich ist, um das Achsrohr in den möglicherweise begrenzten Bauraum einsetzen zu können. Auch kann ein zweiter Abschnitt mehrere Abflachungen oder Ausbuchtungen aufweisen. Das größte bevorzugte Verhältnis von 0,95 liegt insbesondere dann vor, wenn nur eine geringe Abweichung in der Geometrie des ersten Abschnitts erforderlich ist, um das Achsrohr in ein Fahrwerk eines Nutzfahrzeuges einbauen zu können. Es versteht sich, dass je geringer die Abweichung der Geometrie des zweiten Abschnitts von der Geometrie des ersten Abschnitts ist, desto ungestörter auch die Momenten- und Kraftverläufe im Material des Achsrohres bei Biegung und Torsion stattfinden können und das Material entsprechend weniger stark belastet wird als bei großen Veränderungen im Querschnittsverlauf. Die vorliegende Erfindung schafft in diesem Zusammenhang einen guten Kompromiss zwischen einer einerseits guten Ausnutzung des vorhandenen Bauraums und einer andererseits optimalen Kraft- bzw. Momentübertragung durch das Achsrohr.

Vorzugsweise weist der zweite Abschnitt einen zweiten Umfang auf, der kleiner ist als ein erster Umfang des ersten Abschnitts. Als Umfang des jeweiligen Abschnitts wird in diesem Zusammenhang der tatsächliche quer zur Längsachse gemessene Umfang der Außengeometrie des entsprechenden Abschnitts definiert. Sofern die Außengeometrie des ersten oder des zweiten Abschnitts Abweichungen aufweist, soll als Umfang des jeweiligen Abschnitts der durchschnittliche bzw. mittlere Umfang definiert sein. Der Umfang ist in diesem Zusammenhang auch unabhängig von der Querschnittsgeometrie, also beispielsweise von einer kreis- oder einer polygonalen Geometrie des jeweiligen Abschnitts messbar.

Insbesondere bevorzugt steht der zweite Umfang zum ersten Umfang in einem Verhältnis von 0,820-0,999, vorzugsweise 0,850-0,997 und insbesondere bevorzugt von ca. 0,990-0,995. Diese bevorzugten Verhältnisbereiche des zweiten Umfangs zum ersten Umfang drücken insbesondere die Tatsache aus, dass eine Abweichung der Geometrie des zweiten Abschnitts von der Geometrie des ersten Abschnitts insbesondere an ihrer Außenseite nur insoweit erfolgen soll, dass gleichzeitig das Flächenträgheitsmoment und damit das resultierende Widerstandsmoment gegen Biege- und Torsionsmomente des Achsrohres nicht unzulässig verringert werden soll. Bei Einhaltung zumindest des größten hier vorgeschlagenen Bereiches für ein Verhältnis des zweiten Umfangs zum ersten Umfang von 0,820-0,999 ist es gewährleistet, dass der Achskörper und insbesondere das Achsrohr nicht unzulässig stark lokal geschwächt wird und ausreichend hohe Biegemomente und Torsionsmomente bzw. Biegekräfte übertragen kann, ohne dass Materialschäden drohen.

Vorzugsweise weist der zweite Abschnitt eine mittlere Wandstärke auf, die in einem Verhältnis von 1,01-1,3, vorzugsweise 1,03-1,2 und besonders bevorzugt 1,05-1,15 zur mittleren Wandstärke des ersten Abschnitts steht. Insbesondere dann, wenn eine lokale Schwächung des Flächenträgheitsmoments bzw. des Widerstandsmoments des Achskörpers im Bereich des zweiten Abschnitts droht und zu unzulässigen Materialspannungen führen würde, ist es bevorzugt, dass die Wandstärke im Bereich des zweiten Abschnitts derart erhöht wird, dass die Widerstandsfähigkeit des Achsrohres gegenüber Biege- und Torsionsmomenten im Bereich des zweiten Abschnitts wieder ansteigt. Nachteilig bei einer Erhöhung der mittleren Wandstärke ist das erhöhte Gewicht des Achskörpers. Daher sollte die mittlere Wandstärke des zweiten Abschnitts nicht mehr als ein 1,3-faches der mittleren Wandstärke des ersten Abschnitts betragen, um nicht den Effekt, welcher durch eine Erhöhung der mittleren Quererstreckung des Achskörpers und der daraus resultierenden Gewichtssenkung des Achskörpers resultiert, durch zu starke Erhöhung der lokalen Wandstärke im Bereich des zweiten Abschnitts wieder zunichte zu machen. Insbesondere bevorzugt sollte das Verhältnis der mittleren Wandstärken zueinander in einem Verhältnis von 1,05-1,15 gehalten werden, weil dabei eine lokale Gewichtserhöhung minimiert wird und gleichzeitig durch gezielte Ausrichtung des Bereiches der höheren Wandstärke entsprechend den zu erwartenden Biegemomenten trotz der nur geringen Gewichtserhöhung eine ausreichende Festigkeit des Achsrohres gewährleistet werden kann.

Bevorzugt weist der zweite Abschnitt eine Abflachung mit einer im Wesentlichen ebenen Fläche auf. Die ebene Fläche des zweiten Abschnitts erlaubt es, bevorzugt größere Periphersysteme ohne Weiteres in der Nähe des Achsrohres anzuordnen, wobei gleichzeitig durch die möglichst gleichmäßig und ebene Oberfläche der Abflachung des zweiten Abschnitts das Flächenträgheitsmoment bzw. das Widerstandsmoment des Achsrohres nicht übermäßig verringert wird, beispielsweise durch Kerben oder Mulden, welche Kerbwirkung und damit Spannungsspitzen zur Folge haben können.

Insbesondere bevorzugt weist die Abflachung eine Breite auf, die zum ersten Umfang in einem Verhältnis von 0,05-0,31, vorzugsweise von 0,1-0,2 und besonders bevorzugt von ca. 0,11-0,12 steht. Die Breite der Abflachung des zweiten Abschnitts stellt dabei wiederum einen guten Kompromiss zwischen einer guten Ausnutzung des das Achsrohr umgebenen Bauraums einerseits und einer ausreichenden verbleibenden Restfestigkeit des Achsrohres im Bereich des zweiten Abschnitts und insbesondere im Bereich der Abflachung des zweiten Abschnitts andererseits dar. Je größer dabei die Breite der Abflachung relativ zum ersten Umfang des ersten Abschnitts des Achsrohres ist, desto tiefer ist zwangsläufig auch die Einbuchtung bzw. der Rücksprung, welchen der zweite Abschnitt bezogen auf den ersten Abschnitt darstellt und entsprechend groß ist auch die Beeinträchtigung der Biegefestigkeit des Achsrohres im Bereich des zweiten Abschnitts des Achsrohres. Einen besonders guten Kompromiss zwischen der guten Ausnutzung des für das Achsrohr zur Verfügung stehenden Bauraumes und einer gleichzeitig hohen Festigkeit bei geringen Wandstärken des Achsrohres, stellt dabei der bevorzugte Bereich von 0,11-0,12 der Breite der Abflachung relativ zum Umfang des ersten Abschnitts dar.

Insbesondere bevorzugt ist es, dass der zweite Abschnitt einen Querschnitt aufweist, der zumindest bereichsweise kreisringförmig ist. In Bezug auf hohe Flächenträgheitsmomente ist es vorteilhaft, wenn der Achskörper bzw. das Achsrohr in großen Teilen seiner Erstreckung kreisförmige bzw. insbesondere bevorzugt kreisringförmige Querschnitte bzw. Querschnittsgeometrien aufweist. Auf diese Weise kann bei einer bestimmten Wandstärke ein höheres Biegemoment bzw. Torsionsmoment übertragen werden als bei beispielsweise polygonalen Querschnitten gleicher Wandstärke. Insbesondere bevorzugt ist es dabei, dass auch der zweite Abschnitt eine dem ersten Abschnitt ähnliche oder abschnittsweise deckungsgleiche Querschnittsgeometrie aufweist, welche insbesondere kreisringförmig ist.

Dabei ist es bevorzugt, dass der kreisringförmige Bereiche des zweiten Abschnitts ein 0,55-0,9-faches, vorzugsweise ein 0,6-0,85-faches und besonderes bevorzugt ein 0,7-0,8-faches des Querschnitts des zweiten Abschnitts einnimmt. Insbesondere bevorzugt entspricht dabei der kreisringförmige Querschnitt des zweiten Abschnitts dem kreisringförmigen Querschnitts des ersten Abschnitts, wobei der Querschnitt des zweiten Abschnitts vom Querschnitt des ersten Abschnitts nur in den Bereichen abweicht, in denen er nicht kreisringförmig ist. Je höher dabei der Anteil einer kreisringförmigen Ausbildung des Querschnitts des zweiten Abschnitts am Gesamtquerschnitt des zweiten Abschnitts ist, desto höher ist entsprechend auch das Flächenträgheitsmoment des zweiten Abschnitts bei gleichbleibenden Wandstärken. Gleichzeitig soll aber durch die lokale Abweichung von der kreisringförmigen Geometrie das Anlagern von Periphersystemen im Bereich des Achskörpers ermöglicht werden. Das beschriebene Verhältnis von 0,7-0,8 des kreisringförmigen Bereichs des Querschnitts des zweiten Abschnitts zum Gesamtquerschnitt des zweiten Abschnitts stellt dabei einen besonders guten Kompromiss zwischen einer guten Bauraumausnutzung durch das Achsrohr des Achskörpers und gleichzeitig einem hohen Flächenträgheitsmoment und damit einer hohen Widerstandsfähigkeit des Achsrohres dar.

Vorzugsweise weist das Achsrohr einen dritten Abschnitt auf, dessen Querschnitt deckungsgleich mit dem Querschnitt des ersten Abschnitts ist, wobei der zweite Abschnitt zwischen dem ersten Abschnitt und dem dritten Abschnitt angeordnet ist. Bevorzugt kann also der zweite Abschnitt des Achsrohres nicht erst im äußeren bzw. im distalen Endbereich des Achsrohres angeordnet sein, sondern auch in der Art, dass auf den zweiten Abschnitt noch ein dritter Abschnitt des Achsrohres folgt, welcher einen Querschnitt aufweist, welcher zu dem des ersten Abschnitts vorzugsweise identisch ist. Für diesen bevorzugten Fall ist an dem distalen Ende des dritten Abschnitts, welches vom zweiten Abschnitt abgewandt ist, ein zweiter Übergangsabschnitt angeordnet, welcher wiederum zur Aufnahme des Achsstummels dient.

Insbesondere bevorzugt ist zwischen dem ersten und zweiten Abschnitt ein erster Übergangsabschnitt vorgesehen, wobei der erste Übergangsabschnitt eine Mantelfläche aufweist, die zum ersten Abschnitt hin im Wesentlichen synklastisch gekrümmt ist und zum zweiten Abschnitt im Wesentlichen antiklastisch gekrümmt ist. Eine synklastische bzw. eine antiklastische Krümmung einer Fläche ist aus dem Stand der Technik hinlänglich bekannt. Im vorliegenden Fall dienen die synklastische und die antiklastische Krümmung insbesondere bevorzugt der spannungsgünstigen Gestaltung der Obenflächengeometrie des Achsrohres im Bereich zwischen dem ersten Abschnitt und dem zweiten Abschnitt. Dabei besteht ein Krümmungsanteil der synklastischen bzw. der antiklastischen Krümmung jeweils in einer Krümmung um die Längsachse des Achsrohres und der jeweils andere Krümmungsanteil des Übergangsabschnitts bildet eine gleichmäßig gekrümmte bzw. gerundete Fläche aus, welche in den ersten oder in den zweiten Abschnitt gleichmäßig übergeht und so Spannungsspitzen vermeidet.

Insbesondere bevorzugt ist hierbei der synklastisch gekrümmte Teil der Mantelfläche des Übergangsabschnitts im Wesentlichen tangential in die Mantelfläche des ersten Abschnitts des Achsrohres übergehend ausgelegt. Auf diese Weise werden vorzugsweise Kerbwirkungen und daraus resultierende Spannungsspitzen im Bereich der Mantelfläche des Übergangsabschnitts vermieden. Weiterhin bevorzugt geht der antiklatisch gekrümmte Teil der Mantelfläche des Übergangsabschnitts im Wesentlichen tangential in die Mantelfläche des zweiten Abschnitts des Achsrohres über. Indem die Übergangsfläche und insbesondere die Mantelfläche des Übergangsabschnitts im Wesentlichen tangential in die Mantelfläche des zweiten Abschnitts übergeht, werden auch in diesem Übergangsbereich Kerbwirkung und daraus resultierende Spannungsspitzen vermieden. Im Wesentlichen tangential bedeutet, dass durchaus kleinere Abweichungen von einer mathematisch perfekten Tangentialität auftreten können, welche insbesondere fertigungsbedingt sind. Im Rahmen eines wirtschaftlichen Fertigungsaufwandes werden die Abweichungen von der Tangentialität vorzugsweise derart gering gehalten werden, dass eine hohe Festigkeit des Achsrohres gewährleistet ist.

Vorzugsweise ist der Achsstummel an einem zweiten Übergangsabschnitt des Achsrohres festgelegt, wobei der zweite Übergangsabschnitt eine kreisringförmige Endfläche aufweist. Der zweite Übergangsabschnitt des Achsrohres kann vorzugsweise entweder an dem zweiten Abschnitt des Achsrohres oder, wenn dieser vorhanden ist, auch den dem dritten Abschnitt des Achsrohres vorgesehen sein. Unabhängigkeit davon, welche Querschnittsgeometrie das Achsrohr aufweist, d.h. kreisringförmig oder polygonal, dient der zweite Übergangsabschnitt vorzugsweise dazu, von dieser Geometrie möglichst gleichmäßig und mit einer gleichmäßigen Rundung in einen kreisringförmigen Querschnitt überzuleiten, so dass der rotationssymmetrisch ausgebildete Achsstummel leicht an der kreisringförmigen Endfläche des zweiten Übergangsabschnitt festlegbar ist. Insbesondere bevorzugt kann der Achsstummel dabei mittels Reibschweißen an dem zweiten Übergangsabschnitts des Achsrohres festgelegt sein. Vorteilhaft bei der Festlegung des Achsstummels mittels Reibschweißen ist, dass der Achsstummel beispielsweise ein vom Achsrohr verschiedenes Herstellungsmaterial aufweisen kann und während des Schweißvorgangs die auftretenden Temperaturen nicht derart hoch sind, dass lokale Gefügeschädigungen auftreten. Alternativ hierzu kann der Achsstummel auch einstückig mit dem Achsrohr hergestellt sein, beispielsweise mittels eines Schmiedeverfahrens oder eines Innenhochdruckumformverfahrens.

Weiterhin erfindungsgemäß ist eine Fahrwerkseinheit vorgesehen, umfassend einen Achskörper und ein Periphersystem, wobei der Achskörper ein Achsrohr und einen Achsstummel aufweist, wobei das Achsrohr einen ersten Abschnitt aufweist, welcher hohlkörperförmig ausgebildet ist, wobei das Periphersystem derart nahe am Achsrohr anordenbar ist, dass es eine gedachte Fortsetzung der Außengeometrie des ersten Abschnitts schneidet, wobei das Achsrohr im Schnittbereich zwischen der gedachten Außengeometrie und dem Periphersystem einen zweiten Abschnitt aufweist, welcher vom Periphersystem beabstandet ist, wobei der zweite Abschnitt einen zweiten Umfang aufweist, der kleiner ist als ein erster Umfang des ersten Abschnitts, wobei der zweite Umfang zum ersten Umfang in einem Verhältnis von 0,820 - 0,995 steht, wobei der zweite Abschnitt eine Abflachung mit einer im Wesentlichen ebenen Fläche aufweist, und wobei die Abflachung eine Breite aufweist, die zum ersten Umfang in einem Verhältnis von 0,05 - 0,31 steht. Die Fahrwerkseinheit des Nutzfahrzeuges ist vorzugsweise der Fahrwerksbereich des Nutzfahrzeuges, in welchem ein Achskörper, besonders bevorzugt die starre Achse, einer Zugmaschine oder eines Anhängers des Nutzfahrzeuges montiert ist. Der Achskörper ist dabei vorzugsweise ein hohlkörperförmig ausgebildetes Bauteil, welches ein Achsrohr und einen Achsstummel aufweist und erstreckt sich im Wesentlichen längs einer Längsachse. Die Fahrwerkseinheit weist weiterhin ein Periphersystem auf, wobei das Periphersystem beispielsweise Teil eines Bremssystems, eines Leitungssystems, des ABV-Sensors eines Geschwindigkeitsmesssystems, oder eines sonstigen Kraftübertragungssystems des Fahrzeuges ist. Das Achsrohr weist vorzugsweise eine möglichst große räumliche Erstreckung quer zur Längsachse auf, insbesondere um das Widerstandsmoment bzw. das Flächenträgheitsmoment der Querschnitte des Achsrohres möglichst groß zu halten und so eine hohe Biegefestigkeit und die Torsionsfestigkeit des Achsrohres auch bei möglichst geringen Wandstärken zu erhalten. Dabei würde es zu Bauraumkollisionen zwischen dem Achsrohr und einem Periphersystem der Fahrwerkseinheit des Nutzfahrzeuges kommen, wenn nicht das Achsrohr einen zweiten Abschnitt aufweisen würde, welcher derart ausgelegt ist, dass das Achsrohr im eingebauten Zustand genügend Bauraum zur Verfügung stellt, in welchem das Periphersystem hineinragen kann. Insbesondere bevorzugt ist es dabei, dass ein erster Abschnitt des Achsrohres im Wesentlichen zylinderförmig ausgebildet ist, d. h. entweder mit einem gleichbleibenden polygonalen Querschnitt oder mit einem im Wesentlichen längs der Längsachse gleichbleibenden kreisförmigen bzw. kreisringförmigen Querschnitt, wobei das Periphersystem der Fahrwerkseinheit eine gedachte Fortsetzung der Außengeometrie, d. h. der Mantelfläche des zuvor beschriebenen Zylinders des ersten Abschnitts schneidet. Um eine Kollision bzw. ein Berühren, bzw. ein Zusammenstoßen von Achsrohr und Periphersystem in diesem Schnittbereich zu verhindern, ist der zweite Abschnitt des Achsrohres vorgesehen, welcher mit anderen Worten eine Abweichung, vorzugsweise einen Rücksprung, von der Außengeometrie, bzw. der fortgesetzten Mantelfläche des ersten Abschnitts darstellt. Indem an einem erfindungsgemäßen Achsrohr verschiedene zweite Abschnitte angeordnet werden, ist es möglich, ein und dasselbe Achsrohr bzw. ein und denselben Achskörper in verschiedenen Fahrwerkseinheiten verschiedenen Nutzfahrzeugtypen einsetzen zu können, da auf diese Weise auch eine Vielzahl von verschiedenartig ausgebildeten Periphersystemen der verschiedenen Fahrwerkseinheiten nicht mit dem Achskörper kollidieren. Für eine ausgewählte Anzahl von Fahrzeugtypen kann so ein Achskörper bereitgestellt werden, welcher die Bauraumverhältnisse jedes Fahrzeugtyps möglichst vollständig ausnutzt und aufgrund des großen Querschnitts geringere Wandstärken und damit ein geringeres Gewicht ermöglicht. Es kann somit ein und derselbe Achskörper für eine Vielzahl von Nutzfahrzeugtypen verwendet werden, wobei durch diese Vereinheitlichung sowohl Entwicklungskosten als auch Fertigungskosten eingespart werden können.

Vorzugsweise weist der Achskörper der Fahrwerkseinheit weitere der zuvor genannten Merkmale und Vorteile des erfindungsgemäßen Achskörpers auf.

Weitere Vorteile und Merkmale der Erfindung ergeben sich aus der nachfolgenden Beschreibung bevorzugter Ausführungsformen mit Bezug auf die beigefügten Zeichnungen. Es versteht sich, dass einzelne der in den Ausführungsformen gezeigten Merkmale auch in anderen Ausführungsformen zum Einsatz gelangen können, sofern dies nicht explizit ausgeschlossen wurde. Es zeigen:
- Fig. 1: vier Schnittansichten einer bevorzugten Ausführungsform des erfindungsgemäßen Achskörpers,
- Fig. 2: vier Schnittansichten einer bevorzugten Ausführungsform des erfindungsgemäßen Achskörpers,
- Fig. 3 A: eine Schnittansicht einer bevorzugten Ausführungsform der erfindungsgemäßen Fahrwerkseinheit,

- Fig. 3 B: eine Schnittansicht einer bevorzugten Ausführungsform der in Fig. 3 A gezeigten Fahrwerkseinheit,
- Fig. 3 C: eine weitere Schnittansicht einer bevorzugten Ausführungsform des erfindungsgemäßen Achsköpers, und
- Fig. 4: eine Schnittansicht einer bevorzugten Ausführungsform der erfindungsgemäßen Fahrwerkseinheit.

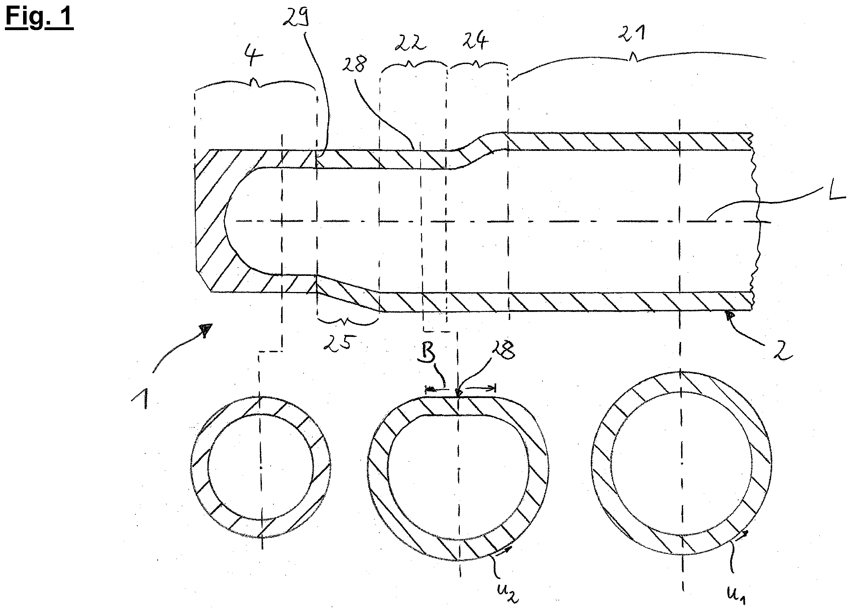

**Fig. 1** zeigt eine Schnittansicht einer bevorzugten Ausführungsform des erfindungsgemäßen Achskörpers 1. Der Achskörper 1 weist ein Achsrohr 2 und einen Achsstummel 4 auf, wobei der Achsstummel 4 bevorzugt durch Reibschweißen an dem Achsrohr 2 festgelegt ist. Das Achsrohr 2 weist einen ersten Abschnitt 21 auf, welcher seine größte Erstreckung längs einer Längsachse L hat und hohlkörperförmig ausgebildet ist. Dabei ist der Querschnitt bzw. die Querschnittsgeometrie des ersten Abschnitts 21 des Achsrohres 2 im Verlauf entlang der Längsachse L im Wesentlichen unverändert bzw. konstant. Der erste Abschnitt 21 grenzt an einen ersten Übergangsabschnitt 24, wobei vorzugsweise sowohl die Außenkontur des ersten Abschnitts 21, als auch dessen Innenkontur gleichmäßig bzw. tangential in die jeweilige mehrfach gekrümmte Außen- und Innenkontur des ersten Übergangsabschnitts 24 übergehen, um insbesondere die Kerbwirkung, welche an scharfen Kanten eines Körpers unter Belastung auftritt, zu verringern. Weiterhin weist das Achsrohr 2 einen zweiten Abschnitt 22 auf, welcher an den ersten Übergangsabschnitt 24 grenzt und auf seinem dem ersten Übergangsabschnitt 24 abgewandten distalen Ende an einen zweiten Übergangsabschnitt 25 grenzt. Der zweite Abschnitt 22 weist insbesondere bevorzugt eine Abflachung 28 auf, welche mit anderen Worten bezogen auf die Außengeometrie des ersten Abschnitts 21 einen Rücksprung darstellt. Schließlich weist das Achsrohr 2 eine Endfläche 29 auf, welche im gezeigten Ausführungsbeispiel eine Endfläche des zweiten Übergangsabschnitts 25 ist und insbesondere bevorzugt kreisförmig ausgebildet ist. An dieser Endfläche 29 kann vorzugsweise der Achsstummel 4 angeschweißt werden. Der Achsstummel 4 entspricht dabei einem aus dem Stand der Technik bekannten Achsstummel und dient insbesondere der drehbaren Lagerung von Fahrzeugrädern an dem Achskörper 1. Zu diesem Zweck ist der Achsstummel 4 rotationssymmetrisch, insbesondere bevorzugt rotationssymmetrisch um die Längsachse L, ausgebildet. Weiterhin im Fig. 1 gezeigt sind drei Schnittansichten von verschiedenen Bereichen bzw. Abschnitten des Achskörpers 1. So ist in der Figur unten rechts eine Schnittansicht des ersten Abschnitts 21 des Achsrohres 2 gezeigt, wobei die bevorzugt kreisringförmige Geometrie sowie der die Außenfläche des ersten Abschnitts 21 umlaufende erste Umfang U₁ dargestellt sind. Es versteht sich, dass eine Rotationssymmetrie um die Längsachse mit einer Ebenensymmetrie zu einer Vielzahl von Ebenen, welche sich in der Längsachse schneiden, gleichzusetzen ist. Die zweite, mittig dargestellte Schnittansicht ist eine Schnittansicht des zweiten Abschnitts 22, wobei der zweite Umfang U₂ dargestellt ist, welcher den zweiten Abschnitt 22 vorzugsweise in einer senkrecht auf der Längsachse L stehenden Ebene umläuft. Der zweite Umfang U₂ ist vorzugsweise kleiner als der erste Umfang U₁. Weiterhin bevorzugt weist die Abflachung 28 eine Breite B auf, welche in einem bevorzugten Verhältnis zum ersten Umfang U₁ von 0,05 - 0,31, vorzugsweise von 0,2 und insbesondere bevorzugt von 0,11 - 0,12 steht. Die Querschnittgeometrie des zweiten Abschnitts 22 entspricht in der hier gezeigten bevorzugten Ausführungsform größtenteils dem Querschnitt des ersten Abschnitts 21 und ist insbesondere bevorzugt im Bereich außerhalb der Abflachung 28 und den benachbart angeordneten Rundungen deckungsgleich bzw. identisch zum Querschnitt des ersten Abschnitts 21. Die dritte in der Figur unten links gezeigte Schnittansicht des Achsstummels 4 zeigt, dass zumindest dessen Außengeometrie rotationssymmetrisch zur Längsachse L ausgebildet ist. Es versteht sich, dass mit dem Ziel eines möglichst hohen Flächenträgheitsmomentes des Achskörpers 1 in verschiedenen Schnittbereichen eine kreisförmige bzw. eine kreisringförmige Querschnittsgeometrie bevorzugt ist, da diese mit möglichst geringen Wandstärken eine besonders hohe Widerstandsfähigkeit gegenüber Biegung und Torsion ermöglicht.

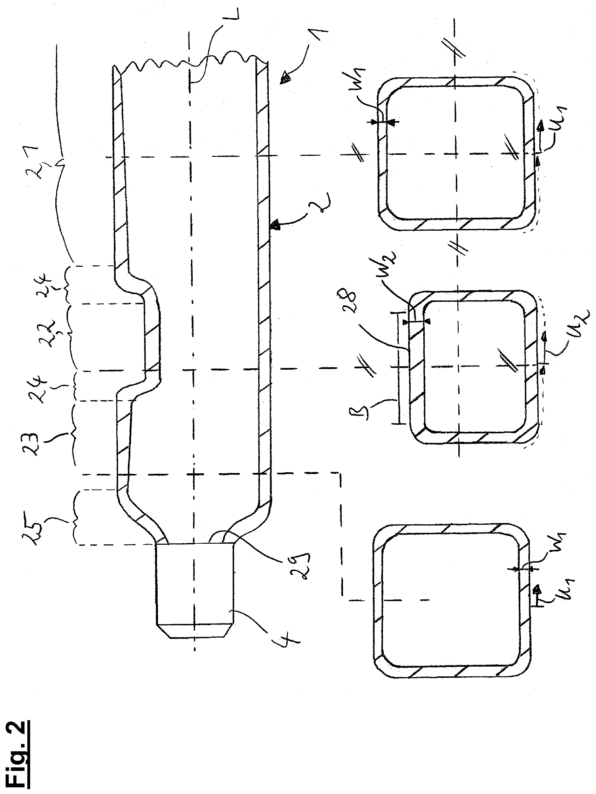

**Fig. 2** zeigt eine weitere bevorzugte Ausführungsform des erfindungsgemäßen Achskörpers 1. Der wesentliche Unterschied zu der in Fig. 1 gezeigten Ausführungsform ist dabei die polygonale Querschnittsform des Achsrohres 2 sowie das Vorhandensein eines dritten Abschnitts 23 des Achsrohres 2. Das in Fig. 2 gezeigte Achsrohr 2 weist einen ersten Abschnitt 21 auf, welcher ebenensymmetrisch zu vorzugsweise zwei Ebenen ausgebildet ist, welche senkrecht aufeinander stehen und sich in der Längsachse L schneiden. Mit anderen Worten weist der erste Abschnitt 21 einen quadratischen Querschnitt auf und ist insbesondere bevorzugt hohlkörperförmig ausgebildet. Der zweite Abschnitt 22 ist, wie in den unten gezeigten Schnittansichten dargestellt, ebenensymmetrisch zu der senkrechten Ebene ausgebildet, zu welcher auch der erste Abschnitt 21 ebenensymmetrisch ausgebildet ist und dagegen nicht ebenensymmetrisch zu der horizontalen Ebene, zu welcher der erste Abschnitt 21 ebenensymmetrisch ausgebildet ist. Mit anderen Worten weist der zweite Abschnitt 22 eine geringere vertikale Erstreckung auf als der erste Abschnitt 21, so dass in dem Bereich, welcher vom zweiten Abschnitt 22 freigelassen ist, beispielsweise ein Periphersystem 6 (in der Figur nicht gezeigt) in der Nähe des Achsrohres 2 anordenbar oder angeordnet ist. Benachbart zum zweiten Abschnitt 22 ist auf jeder Seite je ein erster Übergangsabschnitt 24 vorgesehen, welcher einen möglichst gleichmäßigen Übergang von der Querschnittsgeometrie des ersten Abschnitts 21 in die Querschnittsgeometrie des zweiten Abschnitts 22 und wiederum bis hin zur Querschnittsgeometrie des dritten Abschnitts 23 ermöglicht. Angrenzend an den dritten Abschnitt 23 ist ein zweiter Übertragungsabschnitt 25 vorgesehen, welcher insbesondere bevorzugt von der im Wesentlichen polygonalen bzw. mit Rundungen versehenen polygonalen Querschnittsgeometrie des Achsrohres auf einen kreisförmigen bzw. um die Längsachse L rotationssymmetrischen Querschnitt überleitet. Die Endfläche 29 des Achsrohres 2 ist bevorzugt kreisringförmig ausgebildet, wobei der Achsstummel 4 an dieser kreisringförmig ausgebildeten Endfläche 29 festlegbar ist. In den Schnittansichten ist weiterhin dargestellt, dass der zweite Abschnitt 22 eine Wandstärke W₂ aufweist, welche im Durchschnitt vorzugsweise größer ist als die Wandstärke W₁ des ersten Abschnitts. Diese lokal erhöhte Wandstärke W₂ dient bevorzugt dazu, auch im zweiten Abschnitt 22 ein möglichst hohes Flächenträgheitsmoment bevorzugt so groß wie das Flächenträgheitsmoment des ersten Abschnitts 21 zu erreichen. Hierfür ist aufgrund der geringeren Erstreckung des zweiten Abschnitts 22 quer zur Längsachse L im Vergleich zum ersten Abschnitt 21 die Wandstärke W₂ im Bereich des zweiten Abschnitts 22 größer. Weiterhin dargestellt ist, dass der dritte Abschnitt 23 vorzugsweise eine dem ersten Abschnitt 21 identische Querschnittsgeometrie aufweist. Es versteht sich, dass angrenzend an den dritten Abschnitt 23 in linker Richtung in der Figur auch ein weiterer zweiter Abschnitt 22 vorgesehen sein kann, um weitere Periphersysteme 6 (nicht gezeigt) in der Nähe des Achsrohres 2 anordnen zu können. Die Wandstärken W₁ und W₂ sind als durchschnittliche, mittlere Wandstärken des jeweiligen Querschnitts zu verstehen, d.h. als arithmetisches Mittel der Wandstärke im Verlauf parallel zum Umfang U₁, bzw. U₂.

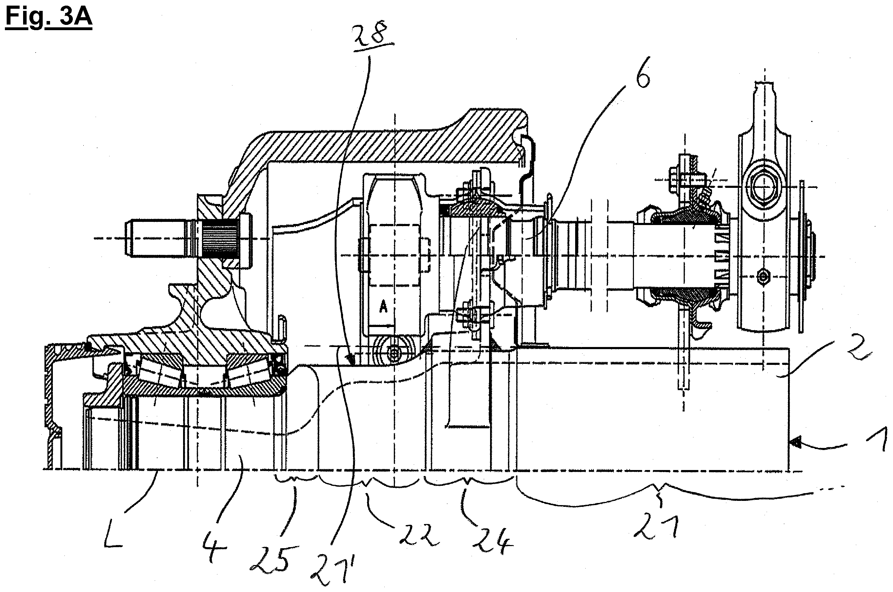

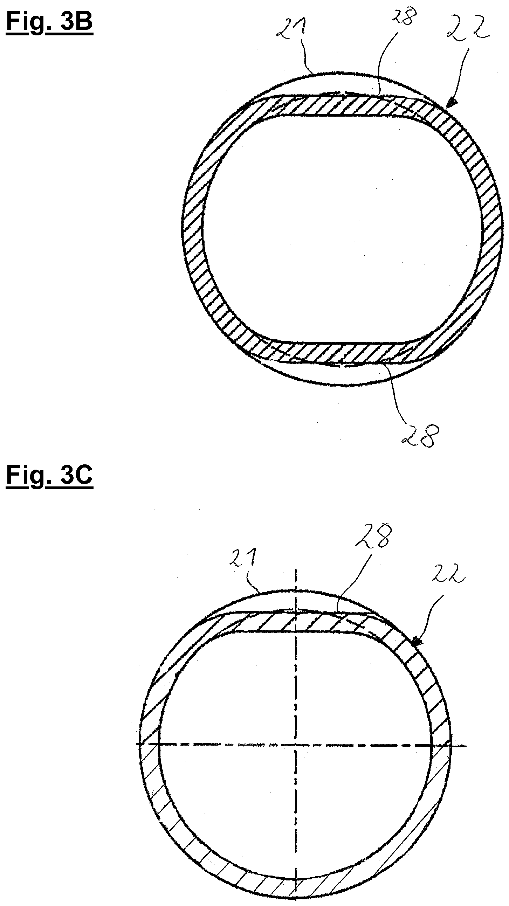

**Fig. 3A** zeigt eine teilweise geschnittene Ansicht einer Fahrwerkseinheit mit einem Periphersystem 6 und einem Achskörper 1. Das Periphersystem 6 ist vorzugsweise das Betätigungssystem einer Trommelbremse eines Nutzfahrzeuges, wobei im Bereich des zweiten Abschnitts 22 dieses Periphersystem vorzugsweise in eine gedachte fortgesetzte Geometrie bzw. Außengeometrie 21' (gestrichelt dargestellt) der Außengeometrie des ersten Abschnitts 21 hineinragt. Um bei einem wie im Fig. 3A gezeigten Fahrwerkssystem dennoch ein Achsrohr 2 mit möglichst großer bzw. möglichst weit ausladender Außengeometrie einsetzen zu können, ohne Kollisionen zwischen den Periphersystemen 6 und dem Achsrohr 2 zu erlauben, weist der zweite Abschnitt 22 vorzugsweise eine Abflachung 28 auf. Zur weiteren Veranschaulichung zeigen **Fig. 3B** und **Fig. 3C** zwei bevorzugte Ausführungsformen des zweiten Abschnitts 22 der in Fig. 3A gezeigten Ausführungsform der erfindungsgemäßen Fahrwerkseinheit. So kann es bevorzugt sein, dass an zwei Seiten des zweiten Abschnitts 22 je eine Abflachung 28 vorgesehen ist. Alternativ und wie in Fig. 3C gezeigt, kann die Abflachung 28 des zweiten Abschnitts 22 nur an einer Seite vorgesehen sein. Die bevorzugte Anzahl an Abflachungen 28 ergibt sich aus den Bauraumverhältnissen einer erfindungsgemäßen Fahrwerkseinheit, wobei ein Achsrohr 2 eine Vielzahl von zweiten Abschnitten 22 aufweisen kann, die bei Einsatz in einer bestimmten Fahrwerkseinheit mit einer geringeren Anzahl von Periphersystemen 6 korrespondieren, wobei bei Einsatz desselben Achskörpers 1 in einer anderen Fahrwerkseinheit die jeweils anderen der vorgesehenen zweiten Abschnitte 22 mit Periphersystemen 6 korrespondieren. Korrespondieren heißt in diesem Zusammenhang, dass die Außengeometrie des zweiten Abschnitts 22 und das Periphersystem 6 sich nicht berühren, dabei aber einen nur möglichst geringen Spalt frei lassen. Auf diese Weise kann der in der Fahrwerkseinheit zur Verfügung stehende Bauraum möglichst vollständig durch einen Achskörper 1 im Sinne der vorliegenden Erfindung ausgenutzt werden.

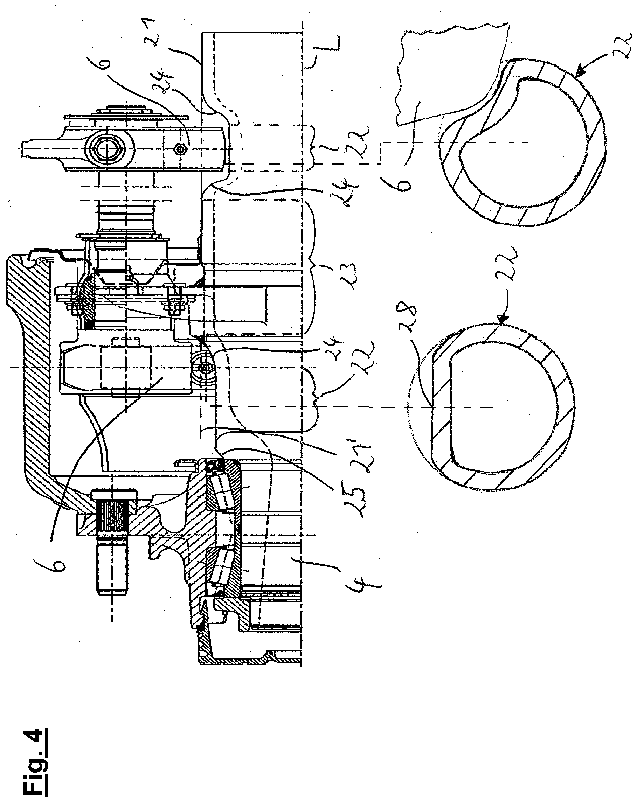

**Fig. 4** zeigt eine teilweise geschnittene Ansicht einer weiteren bevorzugten Ausführungsform der erfindungsgemäßen Fahrwerkseinheit, wobei ein Periphersystem 6 vorgesehen ist, das an zwei Stellen in die gedachte Außengeometrie 21' des ersten Abschnitts 21 eindringt, bzw. diese schneidet. Um bei den gezeigten Bauraumverhältnissen in der Fahrwerkseinheit eine Kollision zwischen dem Achskörper 1 und dem Periphersystem 6 zu verhindern, weist das Achsrohr 2 vorzugsweise zwei zweite Abschnitte 22 auf, deren Schnittansichten in der Figur unten gezeigt sind. Vorzugsweise kann ein zweiter Abschnitt 22 eine lokale Abflachung 28 aufweisen, wie in der linken Schnittansicht gezeigt. Alternativ kann eine als Einbeulung ausgebildete Vertiefung vorgesehen sein, deren Querschnittsgeometrie der Querschnittsgeometrie des Periphersystems 6 im Wesentlichen ähnelt. Im Bereich der zweiten Abschnitte 22 wird entsprechend Bauraum für das Periphersystem 6 im Bereich des Achskörpers 1 freigeben. Ähnlich wie bei der in Fig. 2 gezeigten Ausführungsform, sind zwischen den zweiten Abschnitten 22 zwei Übergangsabschnitte 24 und ein dritter Abschnitt 23 vorgesehen. Besonders bevorzugt weist der erste Abschnitt 21 des Achsrohres 2 einen Außendurchmesser auf der im Bereich von 100mm - 160mm, insbesondere bevorzugt bei ca. 145mm - 150mm liegt.

### Bezugszeichen:

1 - Achskörper
2 - Achsrohr
4 - Achsstummel
6 - Periphersystem
21 - erster Abschnitt
22 - zweiter Abschnitt
23 - dritter Abschnitt
24 - erster Übergangsabschnitt
25 - zweiter Übergangsabschnitt
28 - Abflachung
29 - Endfläche
B - Breite
L - Längsachse
U₁ - erster Umfang
U₂ - zweiter Umfang
W_{1,2} - mittlere Wandstärke

## Patentansprüche

1. Achskörper (1) zum Einsatz in Kraftfahrzeugen, umfassend ein Achsrohr (2) und einen Achsstummel (4),
wobei das Achsrohr (2) hohlkörperförmig ausgebildet ist und einen ebenensymmetrisch ausgebildeten ersten Abschnitt (21) aufweist,
wobei das Achsrohr (2) einen zweiten Abschnitt (22) aufweist, welcher in Bezug auf eine der Symmetrieebenen des ersten Abschnitts (21) unsymmetrisch ausgebildet ist, und
wobei der Achsstummel (4) an einem distalen, rotationssymmetrisch ausgebildeten Ende (29) des Achsrohres (2) angeordnet ist,
**dadurch gekennzeichnet, dass** der zweite Abschnitt (22) einen zweiten Umfang (U₂) aufweist, der kleiner ist als ein erster Umfang (U₁) des ersten Abschnitts (21),
wobei der zweite Umfang (U₂) zum ersten Umfang (U₁) in einem Verhältnis von 0,820 - 0,995 steht,
wobei der zweite Abschnitt (22) eine Abflachung (28) mit einer im Wesentlichen ebenen Fläche aufweist, und
wobei die Abflachung (28) eine Breite (B) aufweist, die zum ersten Umfang (U₁) in einem Verhältnis von 0,05 - 0,31 steht.

2. Achskörper (1) nach Anspruch 1,
wobei ein Querschnitt des ersten Abschnitts (21) zu zwei Ebenen, die sich in der Längsachse (L) des Achsrohres (2) schneiden, ebenensymmetrisch ausgebildet ist,
wobei ein Querschnitt des zweiten Abschnitts (22) zu einer der Ebenen ebenensymmetrisch ausgebildet ist und zu der jeweils anderen Ebene unsymmetrisch ausgebildet ist.

3. Achskörper (1) nach einem der vorhergehenden Ansprüche,
wobei der erste Abschnitt (21) des Achsrohres (2) einen im Wesentlichen konstanten Querschnitt aufweist,
wobei ein 0,4 - 0,95-faches vorzugsweise ein 0,5 - 0,8-faches und besonders bevorzugt ein 0,6 - 0,7-faches des Querschnitts des zweiten Abschnitts (22) deckungsgleich mit dem Querschnitt des ersten Abschnitts (21) ist

4. Achskörper (1) nach einem der vorhergehenden Ansprüche,
wobei der zweite Umfang (U₂) zum ersten Umfang (U₁) in einem Verhältnis von 0,850 - 0,995 und bevorzugt von ca. 0,990 - 0,995 steht.

5. Achskörper (1) nach einem der vorhergehenden Ansprüche,
wobei der zweite Abschnitt (22) eine mittlere Wandstärke (W₂) aufweist, die in einem Verhältnis 1,01 -1,3, vorzugsweise 1,03 - 1,2 und besonders bevorzugt 1,05 - 1,15 zur mittleren Wandstärke (W₁) des ersten Abschnitts (21) steht.

6. Achskörper (1) nach einem der vorhergehenden Ansprüche,
wobei der zweite Abschnitt (22) einen Querschnitt aufweist, der zumindest bereichsweise kreisringförmig ist.

7. Achskörper (1) nach Anspruch 6,
wobei der kreisringförmige Bereich des Querschnitts des zweiten Abschnitts (22) ein 0,55 - 0,9-faches, vorzugsweise ein 0,6 - 0,85-faches und besonders bevorzugt ein 0,7 - 0,8-faches des Querschnitts des zweiten Abschnitts (22) einnimmt.

8. Achskörper (1) nach einem der vorhergehenden Ansprüche,
wobei zwischen dem ersten und dem zweiten Abschnitt (21, 22) ein erster Übergangsabschnitt (24) vorgesehen ist,
wobei der erste Übergangsabschnitt (24) eine Mantelfläche aufweist, die zum ersten Abschnitt (21) hin im Wesentlichen synklastisch gekrümmt ist und zum zweiten Abschnitt (22) hin im Wesentlichen antiklastisch gekrümmt ist.

9. Achskörper (1) nach Anspruch 8,
wobei der synklastisch gekrümmte Teil der Mantelfläche des Übergangsabschnitts (24) im Wesentlichen tangential in die Mantelfläche des ersten Abschnitts (21) des Achsrohres (2) übergeht.

10. Achskörper (1) nach einem der vorhergehenden Ansprüche,
wobei der Achsstummel (4) an einem zweiten Übergangsabschnitt (25) des Achsrohres (2) festgelegt ist,
wobei der zweite Übergangsabschnitt (25) eine kreisringförmige Endfläche (29) aufweist.

11. Achskörper (1) nach einem der vorhergehenden Ansprüche,
wobei die Abflachung (28) eine Breite (B) aufweist, die zum ersten Umfang (U₁) in einem Verhältnis von von 0,1 - 0,2 und bevorzugt von ca. 0,11 - 0,12 steht.

12. Achskörper (1) nach einem der vorhergehenden Ansprüche,
wobei das Achsrohr (2) einen dritten Abschnitt (23) aufweist, dessen Querschnitt deckungsgleich mit dem Querschnitt des ersten Abschnitts (21) ist, und wobei der zweite Abschnitt (22) zwischen dem ersten Abschnitt (21) und dem dritten Abschnitt (23) angeordnet ist.

13. Fahrwerkseinheit eines Nutzfahrzeugs, umfassend einen Achskörper (1) nach Anspruch 1 und ein Periphersystem (6).

## Claims

1. Axle beam (1) for use in motor vehicles, comprising an axle tube (2) and an axle stub (4), the axle tube (2) being of hollow body-shaped configuration and having a first section (21) of plane-symmetrical configuration, the axle tube (2) having a second section (22) which is of asymmetrical configuration in relation to one of the planes of symmetry of the first section (21), and the axle stub (4) being arranged at a distal end (29) of the axle tube (2), which end (29) is of rotationally symmetrical configuration, **characterized in that** the second section (22) has a second circumference (U₂) which is smaller than a first circumference (U₁) of the first section (21), the second circumference (U₂) being at a ratio of 0.820 - 0.995 to the first circumference (U₁), the second section (22) having a flattened portion (28) with a substantially planar face, and the flattened portion (28) having a width (B) which is at a ratio of 0.05 - 0.31 to the first circumference (U₁).

2. Axle beam (1) according to Claim 1, a cross section of the first section (21) being of plane-symmetrical configuration with respect to planes which intersect in the longitudinal axis (L) of the axle tube (2), a cross section of the second section (22) being of plane-symmetrical configuration with respect to one of the planes and being of asymmetrical configuration with respect to the respectively other plane.

3. Axle beam (1) according to either of the preceding claims, the first section (21) of the axle tube (2) having a substantially constant cross section, 0.4 - 0.95, preferably 0.5 - 0.8, and particularly preferably 0.6 - 0.7 times the cross section of the second section (22) being congruent with the cross section of the first section (21).

4. Axle beam (1) according to one of the preceding claims, the second circumference (U₂) being at a ratio of 0.850 - 0.995 and preferably of approximately 0.990 - 0.995 to the first circumference (U₁).

5. Axle beam (1) according to one of the preceding claims, the second section (22) having a mean wall thickness (W₂) which is at a ratio of 1.01 - 1.3, preferably of 1.03 - 1.2 and particularly preferably of 1.05 - 1.15 to the mean wall thickness (W₁) of the first section (21).

6. Axle beam (1) according to one of the preceding claims, the second section (22) having a cross section which is circularly annular at least in regions.

7. Axle beam (1) according to Claim 6, the circularly annular region of the cross section of the second section (22) taking up 0.55 - 0.9, preferably 0.6 - 0.85, and particularly preferably 0.7 - 0.8 times the cross section of the second section (22).

8. Axle beam (1) according to one of the preceding claims, a first transition section (24) being provided between the first and the second section (21, 22), the first transition section (24) having a surface area which is substantially synclastically curved towards the first section (21) and is substantially anticlastically curved towards the second section (22).

9. Axle beam (1) according to Claim 8, the synclastically curved part of the surface area of the transition section (24) merging substantially tangentially into the surface area of the first section (21) of the axle tube (2).

10. Axle beam (1) according to one of the preceding claims, the axle stub (4) being fixed on a second transition section (25) of the axle tube (2), the second transition section (25) having a circularly annular end face (29).

11. Axle beam (1) according to one of the preceding claims, the flattened portion (28) having a width (B) which is at a ratio of from 0.1 - 0.2 and preferably of approximately 0.11 - 0.12 to the first circumference (U₁).

12. Axle beam (1) according to one of the preceding claims, the axle tube (2) having a third section (23), the cross section of which is congruent with the cross section of the first section (21), and the second section (22) being arranged between the first section (21) and the third section (23).

13. Chassis unit of a commercial vehicle, comprising an axle beam (1) according to Claim 1 and a peripheral system (6).

## Revendications

1. Corps d'essieu (1) destiné à être employé dans des véhicules automobiles, incluant un tube d'essieu (2) et une fusée d'essieu (4),
dans lequel le tube d'essieu (2) est réalisé sous la forme d'un corps creux et comprend un premier tronçon (21) réalisé symétrique par rapport à un plan, dans lequel le tube d'essieu (2) comprend un second tronçon (22) qui est réalisé de manière non symétrique par référence à l'un des plans de symétrie du premier tronçon (21), et
dans lequel la fusée d'essieu (4) est agencée à une extrémité (29) distale du tube d'essieu (2), réalisée à symétrie de révolution,
**caractérisé en ce que** le second tronçon (22) comporte une seconde périphérie (U₂) qui est plus petite qu'une première périphérie (U₁) du premier tronçon (21),
dans lequel la seconde périphérie (U₂) est dans un rapport de 0,820 à 0,995 par rapport à la première périphérie (U₁),
dans lequel le second tronçon (22) comprend un méplat (28) avec une surface sensiblement plane, et
dans lequel le méplat (28) a une largeur (B) qui est dans un rapport de 0,05 à 0,31 par rapport à la première périphérie (U₁).

2. Corps d'essieu (1) selon la revendication 1,
dans lequel une section transversale du premier tronçon (21) est réalisée à symétrie plane par rapport à deux plans qui se recoupent sur l'axe longitudinal (L) du tube d'essieu (2),
dans lequel une section transversale du second tronçon (22) est réalisée à symétrie plane par rapport à l'un des plans, et est réalisée de manière non symétrique par rapport à l'autre plan respectif.

3. Corps d'essieu (1) selon l'une des revendications précédentes,
dans lequel le premier tronçon (21) du tube d'essieu (2) présente une section transversale sensiblement constante,
dans lequel une proportion de 0,4 à 0,95 fois, de préférence 0,5 à 0,8 fois et de façon particulièrement préférée 0,6 à 0,7 fois la section transversale du second tronçon (22) présente la même étendue que la section transversale du premier tronçon (21).

4. Corps d'essieu (1) selon l'une des revendications précédentes,
dans lequel la seconde périphérie (U₂) est dans un rapport de 0,850 à 0,995, et de façon préférée d'environ 0,990 à 0,995 par rapport à la première périphérie (U₁).

5. Corps d'essieu (1) selon l'une des revendications précédentes,
dans lequel le second tronçon (22) présente une épaisseur de paroi moyenne (W₂) qui est dans un rapport de 1,01 à 1,3, de préférence de 1,03 à 1,2, et de façon particulièrement préférée de 1,05 à 1,15 fois l'épaisseur de paroi moyenne (W₁) du premier tronçon (21).

6. Corps d'essieu (1) selon l'une des revendications précédentes,
dans lequel le second tronçon (22) présente une section transversale qui, au moins localement, est en forme d'anneau circulaire.

7. Corps d'essieu (1) selon la revendication 6,
dans lequel la zone en forme d'anneau circulaire de la section du second tronçon (22) occupe 0,55 à 0,9 fois, de préférence 0,6 à 0,85 fois, et de façon particulièrement préférée de 0,7 à 0,8 fois la section transversale du second tronçon (22).

8. Corps d'essieu (1) selon l'une des revendications précédentes,
dans lequel il est prévu un premier tronçon de transition (24) entre le premier tronçon et le second tronçon (21, 22),
dans lequel le premier tronçon de transition (24) présente une surface enveloppe qui est incurvée sensiblement dans le même sens par rapport au premier tronçon (21) et qui est incurvée sensiblement dans le sens opposé par rapport au second tronçon (22).

9. Corps d'essieu (1) selon la revendication 8,
dans lequel la partie incurvée dans le même sens de la surface enveloppe du tronçon de transition (24) se transforme sensiblement de manière tangentielle vers la surface enveloppe du premier tronçon (21) du tube d'essieu (2).

10. Corps d'essieu (1) selon l'une des revendications précédentes,
dans lequel la fusée d'essieu (4) est immobilisée au niveau d'un second tronçon de transition (25) du tube d'essieu (2), et
dans lequel le second tronçon de transition (25) comporte une surface terminale (29) en forme d'anneau circulaire.

11. Corps d'essieu (1) selon l'une des revendications précédentes,
dans lequel le méplat (28) a une largeur (B) qui est dans un rapport de 0,1 à 0,2 et de préférence d'environ 0,11 à 0,12 par rapport à la première périphérie (U₁).

12. Corps d'essieu (1) selon l'une des revendications précédentes,
dans lequel le tube d'essieu (2) comprend un troisième tronçon (23), dont la section transversale est identique à la section transversale du premier tronçon (21), et
dans lequel le second tronçon (22) est agencé entre le premier tronçon (21) et le troisième tronçon (23).

13. Unité formant train de roulement d'un véhicule utilitaire, incluant un corps d'essieu (1) selon la revendication 1, et un système périphérique (6).
